# EUROPEAN PATENT APPLICATION

(11) **EP 4 794 151 A1**
(43) Date of publication of application: **19.08.2026**
(21) Application number: 26156493.4
(22) Date of filing: 05.02.2026
(51) Int. Cl.: H02H 7/18, H02H 3/087, B60L 3/04, H01H 47/22

(54) **CIRCUIT PROTECTION SCHEME FOR ELECTRICAL POWER SYSTEMS**

(30) Priority: 17.02.2025 US 202519055236
(71) Applicant: Tesla, Inc., Austin, TX 78725 (US)
(72) Inventor: HALL-SNYDER, Nathaniel, Austin, Texas 78725 (US); GECSEY, Julianna, Austin, Texas 78725 (US); NORDGREN, Carl, Austin, Texas 78725 (US); COLE, Philip, Austin, Texas 78725 (US)
(74) Representative: Liesegang, Eva

(57) **Abstract**

Systems and methods are described for a system with circuit fault protection comprising a battery (106), an interrupting contactor (202A, 202B) electrically connected with the battery (106), and a controller (206). The interrupting contactor (202A, 202B) may be configured to electrically connect the battery (106) to an end of a load (102) in a closed state and to electrically isolate the battery (106) from the end of a load (102) in an open state. The controller (206) may, while the interrupting contactor (202A, 202B) is in a closed state, detect a fault in a circuit that includes the battery (106) and the interrupting contactor (202A, 202B). The controller (206) may further toggle the interrupting contactor (202A, 202B) to open in response to detecting the fault.

## Description

### TECHNICAL FIELD

The present disclosure relates to electric power systems. More particularly, the disclosed technology relates to circuit protection for electric vehicle power distribution.

### BACKGROUND

Electric vehicles and associated infrastructure can utilize conductive cable systems for conducting electricity. These cable systems can provide high current carrying capacity at the voltages for electric vehicles and charging systems. These cables are typically flexible and contain conductive metal, encapsulated by single or multiple layers of insulation and metal sleeving for touch safety and electromagnetic compatibility (EMC) shielding.

In some scenarios, the cable systems or electrical systems may experience issues related to undesired currents or fault currents experienced in the cable systems. For example, failures in one or more components, such as a motor controller, may create undesired current or fault currents. In some other example, deformation of components caused by vehicle collision may cause sudden and/or hazardous fault currents. In still other examples, failures in charging components or systems may also result in undesirable currents.

To prevent damage to the electric systems, electrical components, or the cable systems, the cable system can incorporate a circuit interrupter component or device that can be triggered in the event of a detected fault.

### SUMMARY OF CERTAIN INVENTIVE ASPECTS

The systems, methods and devices of this disclosure each have several innovative embodiments, no single one of which is solely responsible for all of the desirable attributes disclosed herein. Details of one or more implementations of the subject matter described in this specification are set forth in the accompanying drawings and the description below.

In some aspects, the techniques described herein relate to a system with circuit fault protection, the system including: a battery; an interrupting contactor electrically connected with the battery, the interrupting contactor configured to electrically connect the battery to an end of a load in a closed state and to electrically isolate the battery from the end of the load in an open state; and a controller configured to: while the interrupting contactor is in the closed state, detect a fault in a circuit that includes the battery and the interrupting contactor; and toggle the interrupting contactor to the open state in response to detecting the fault.

In some aspects, the techniques described herein relate to a system, wherein the controller is configured to toggle the interrupting contactor to the open state in less than 1 millisecond from detecting the fault.

In some aspects, the techniques described herein relate to a system, wherein to toggle the interrupting contactor to the open state, the controller is configured to reduce a coil current of the interrupting contactor at least by switching a state of a transistor , and wherein reducing the coil current of the interrupting contactor causes the interrupting contactor to enter the open state.

In some aspects, the techniques described herein relate to a system, wherein to reduce the coil current of the interrupting contactor, the controller is configured to switch a state of a second transistor, the second transistor applying a pulse width modulation signal to the circuit during normal operation, and the second transistor connected to ground.

In some aspects, the techniques described herein relate to a system, wherein switching the state of the transistor causes a bus voltage to be applied to the interrupting contactor, and wherein after application of the bus voltage, an arc voltage of the interrupting contactor is greater than a supply voltage of the battery.

In some aspects, the techniques described herein relate to a system: wherein a diode in parallel with the transistor is configured to function as a voltage source for the voltage applied to the interrupting contactor, and wherein the bus applied to the interrupting contactor coil causes the coil current to rapidly decrease.

In some aspects, the techniques described herein relate to a system, further including a second interrupting contactor in electrical communication with the battery.

In some aspects, the techniques described herein relate to a system, wherein the controller is further configured to return the system to operation after the fault is resolved.

In some aspects, the techniques described herein relate to a system, wherein the system is configured to provide circuit fault protection while the controller is unpowered.

In some aspects, the techniques described herein relate to a system, wherein the circuit is fuseless.

In some aspects, the techniques described herein relate to a system for controlling circuit faults, the system including: a battery; a plurality of interrupting contactors, the plurality of interrupting contactors including: a first interrupting contactor configured to electrically connect the battery to a first end of a load in a closed state and to electrically isolate the battery from the first end of the load in an open state; and a second interrupting contactor configured to electrically connect the battery to a second end of the load in a closed state and to electrically isolate the battery from the load in an open state; and a control circuit configured to: detect a fault while the first interrupting contactor is in the closed state; and toggle the first interrupting contactor to the open state in response to detecting the fault.

In some aspects, the techniques described herein relate to a system, wherein the control circuit further includes: a first transistor in electrical communication with the first interrupting contactor; a first diode in parallel to the first field effect transistor; and a second transistor connected between the first interrupting contactor and ground; and a third transistor in electrical communication with the second interrupting contactor; a third diode in parallel to the third transistor; and a fourth transistor connected between the second interrupting contactor and ground.

In some aspects, the techniques described herein relate to a system, further including a third interrupting contractor in series with the first interrupting contactor.

In some aspects, the techniques described herein relate to a system, wherein the control circuit is configured to toggle the interrupting contactor to the open state in less than 1 millisecond from detecting the fault.

In some aspects, the techniques described herein relate to a method of circuit protection, the method including: detecting a fault condition of a circuit that includes an interrupting contactor and a battery, the interrupting contactor being closed to electrically connect an end of the battery to a load during the detecting, and the fault condition being associated with a fault current being applied to the circuit; and in response to said detecting, causing the interrupting contactor to open to electrically isolate the end of the battery from the load to thereby interrupt the fault current.

In some aspects, the techniques described herein relate to a method, wherein said causing the interrupting contactor to transition to the open state occurs in less than 1 millisecond from detecting the fault condition.

In some aspects, the techniques described herein relate to a method, wherein said causing the interrupting contactor to open further includes applying a bus voltage greater than a supply voltage of the battery to the interrupting contactor.

In some aspects, the techniques described herein relate to a method, wherein said applying a voltage greater than the supply voltage of the battery further includes: switching a state of a transistor wherein switching the state of the transistor causes a diode in parallel with the transistor to function as a voltage source for the voltage applied to the interrupting contactor coil; and wherein the voltage being applied to the interrupting contactor causes a coil current of the interrupting contactor to rapidly decrease.

In some aspects, the techniques described herein relate to a method, wherein applying a voltage greater than an overstress voltage of the battery further includes switching a state of a second transistor, the second transistor applying a pulse width modulation signal to the circuit, and the second transistor connected to ground.

In some aspects, the techniques described herein relate to a method, wherein the fault condition is a short circuit.

### BRIEF DESCRIPTION OF DRAWINGS

Aspects and advantages of the technology disclosed herein are described herein with reference to drawings of preferred embodiments, which are intended to illustrate, and not to limit, the present invention.
FIG. 1 shows a schematic representation of an example electric vehicle in accordance with some aspects of the present disclosure.
FIG. 2 is an example schematic diagram for a circuit for battery protection using interrupting contactors in accordance with some aspects of the present disclosure.
FIG. 3 is an example schematic diagram for a circuit for protection of batteries using interrupting contactors in accordance with some aspects of the present disclosure.
FIG. 4 illustrates an example interrupting contactor circuit, which may be used to control an interrupting contactor in accordance with some aspects of the present disclosure.
FIG. 5 illustrates example operation of an interrupting contactor in accordance with some aspects of the present disclosure.
FIG. 6 illustrates example waveforms associated with handling a fault circuit using an interrupting contactor in accordance with some aspects of the present disclosure.

### DETAILED DESCRIPTION OF CERTAIN EMBODIMENTS

Generally described, aspects of the present disclosure relate to a circuit protection scheme for electric power systems. Electric power systems may include, but are not limited to, batteries, supercapacitors, alternating current (AC) grid systems, and the like, or some combination thereof. Illustratively, a circuit may include one or more interrupting contactors electrically connected with a battery or battery pack. A system controller may monitor the circuit to detect one or more faults. If a fault is detected, the controller may open the interrupting contactor. The system controller may implement a fast coil turn off methodology to quickly reduce a coil current of an inductor of the interrupting contactor. The reduction of the coil current may allow the interrupting contactor to open more quickly. Opening of the contactor more quickly may prevent or reduce damage to the circuit. Opening the contractor more quickly may, prevent damage the surrounding environment. The interrupting contactor may, for example, be implemented in an electric vehicle. Opening the contactor may prevent harm and/or damage to repair personnel and equipment surrounding the electric vehicle. The circuit protection scheme may be a fuseless scheme configured to quickly mitigate high currents in short periods of time. As one example, the circuit protection scheme may be configured to handle a 10,000 Amp (A) current within 1 millisecond (ms).

In some embodiments, such as embodiments related to electric vehicles and electric vehicle charging systems, the electrical systems can experience voltages in the range of 450 Volts (V) to 1000V, or possibly higher. Such voltages are generally considered to be "higher voltage" applications and can achieve the power demands associated with relatively high-rate electric vehicle charging. In the event of a fault or other detected event, the vehicle and/or charging cable system can incorporate one or more circuit interrupter components that can be triggered to avoid damage to the vehicle, external charging systems, users, and the like, or any suitable combination thereof. Certain circuit interrupter components can include fuse-based components or circuit-breaker-based components.

Circuit interrupters can generally operate by creating an open circuit between two points of a cable system in order to impede the flow of current between the points. One example of a method of handling circuit interrupts is to use a thermal fuse to interrupt faults, such as short circuits. The thermal fuse may be established between the battery and one or more contactors. The thermal fuse may be slower to interrupt moderate currents. The slowness of the interruption may damage the contactors. This may reduce the reliability of the contactors. In this method, the controller would continue to power the contactors during a fault event to keep the contactors closed and allow the fuse to work. In some cases, this could cause the contactors to rupture and increase a risk of damage to the circuit. Moreover, the thermal fuse may be slow to melt and interrupt the short circuit, which may increase a risk to damage of the circuit.

Another example of a typical method of handling circuit interrupts is to use a pyrotechnic fuse. Use of the pyrotechnic fuses can reduce the risk of rupture of the contactors at least by reducing the amount of current flow through the contactors. However, the pyrotechnic fuse would typically be replaced after every use. Moreover, the pyrotechnic fuses are active devices. The controller would be powered to constantly monitor the circuit including the pyrotechnic fuse for short circuit events. In an automotive environment, such as for an electric vehicle, there may be reliability issues with the system controller. Because the system controller would to be constantly on to allow the pyrotechnic fuse in the fault protection circuit, reliability issues in the system controller may lead to reliability issues with the fault protection circuit.

The above challenges, among others, are addressed by aspects of the present disclosure, which address these technical challenges by using a system controller to quickly reduce coil current of an interrupting contactor for a fault protection circuit including the interrupting contactor and a battery. The fault protection circuit may be fuseless. In other words, the fault protection circuit may not include a fuse (e.g., a thermal fuse, a pyrotechnic fuse, or the like). Instead, the system controller may toggle a state of the interrupting contactors to open and close the fault protection circuit. The circuit protection can be provided when the system controller is unpowered (e.g., when an electric vehicle is off).

The controller may, for example, be electrically connected to an interrupting contactor through a control circuit. The system controller, interrupting contactor and control circuit ("interrupting contactor circuit," for brevity) may be part of a larger fault protection circuit including a battery and a load. The load may, for example, be a motor. The motor may be part of an electric vehicle (EV).

Under normal operation, the interrupting contactor may be in a closed state. In some examples, a pulse width modulation (PWM) control signal may be received by the interrupting contactor circuit. The system controller may, for example, provide the PWM control signal. The PWM control signal may, in some examples, modify the voltage to maintain the coil current at a level that keeps the interrupting contactor in a closed state. In further examples, an inductance caused by the interrupting contactor may keep a coil current flowing through the interrupting contactor as the PWM control signal changes the voltage. The system controller may be electrically connected to the interrupting contactor circuit. On detection of a fault in the fault protection circuit, the system controller may remove power from the interrupting contactor circuit in a manner that results in quick reduction of the coil current (also referred to herein as "super fast coil turn off"). Super fast coil turn off may, for example, reduce coil current in the circuit in less than a millisecond.

The interrupting contactor circuit may, in some examples, include a transistor. The transistor may, for example, be a field effect transistor (FET). Turning the FET on may allow an inductance from a solenoid of the interrupting contactor to keep the coil current flowing through the circuit as the voltage changes based on the PWM signal. To cause super fast coil turn off, the system controller may change the state of the FET. The change in state of the FET may cause a voltage to be applied to the interrupting contactor. Application of the voltage may reduce the coil current. Reduction of the coil current may allow the interrupting contactor to open in a shorter period of time. This reduction of time may in turn reduce the amount of damage done by the fault current. For example, the reduction in coil turn-off time may limit duration of an arc inside the interrupting contactor circuit, which may mitigate a risk of the interrupting contactor rupturing. As another example, the reduction in coil turn-off time may end the fault current event quickly, which may reduce the damage to the component. Ending the fault current event quickly may further protect the surrounding environment of a system including the interrupting circuit. The surrounding environment may, in some examples, include a user that caused the fault.

The fault protection circuit may, in some examples, include multiple interrupting contactors. As one example, a first interrupting contactor may be electrically connected to a positive terminal of a battery. A second interrupting contactor may, in further examples, be connected to a negative terminal of a battery. Alternatively, both the first and second interrupting contactors may be connected to the same terminal of the battery. The inclusion of multiple interrupting contactors may increase the reliability of the circuit. For example, if one of the interrupting contactors fails, the system controller may still be able to open one or more other interrupting contactors in the circuit. Opening another contactor may reduce damage as described above.

The above-described aspects and other aspects of the disclosure will now be described with regard to certain examples, embodiments, and aspects, which are intended to illustrate, but not limit, the disclosure. The foregoing aspects and many of the attendant advantages of this disclosure will become more readily appreciated as the same become better understood by reference to the following description, when taken in conjunction with the accompanying drawings.

In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

### Example Electric Vehicle

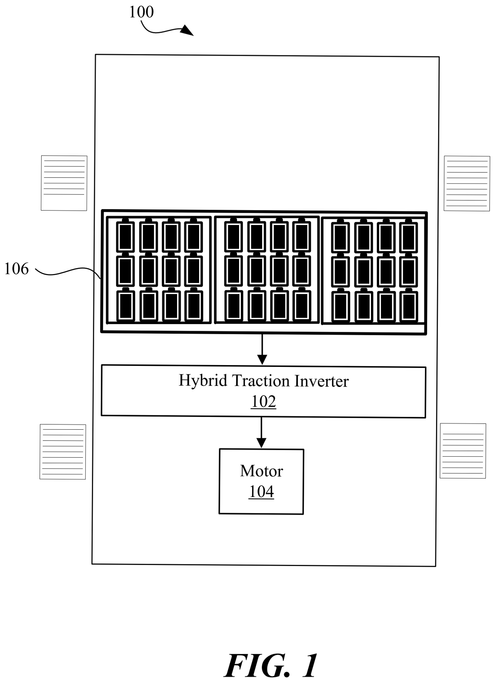

In certain applications, the circuit protection disclosed herein can be implemented in electric vehicles. FIG. 1 shows a schematic representation of an example electric vehicle 100 in accordance with some aspects of the present disclosure. As shown in FIG. 1, the motor 104, the inverter 102, the system controller 106, the interrupting contactor circuit 108, and the battery 110 may be communicatively coupled and may form at least a portion of a drivetrain or a powertrain of the electric vehicle 100.

The electric vehicle 100 includes at least a inverter 102, a motor 104, system controller 106, interrupting contactor circuit 108, and a battery 110. The inverter 102 may convert direct current (DC) into alternating current (AC). For example, the inverter 102 may convert DC into three-phase AC current and supply the three phase AC current to the motor 104. The inverter 102 may utilize one or more types (e.g., Si-based, SiC-based, SiGe-based, GaN-based, GaAs-based, or the like) of power switches to supply current to the motor 104. The inverter 102 may use one or more of field effect transistors (FETs) such as metal oxide semiconductor FETs, junction field effect transistors (JFETs), insulated-gate field effect transistors (IGFETs), bipolar transistors, insulated-gate bipolar transistors (IGBTs) integrated gate-commutated thyristors (IGCT), high electron mobility transistors (HEMTs), or the like to supply current to the motor 104.

The motor 104 may be any suitable type of electric motor, such as an AC or DC permanent magnet motor, AC induction motor, AC brushless motor, or the like. In some embodiments, the motor 104 may be a three-phase AC permanent magnet motor. The motor 104 may generate a drive force or a torque for the electric vehicle 100 based on electric power supplied from the battery 110 through the inverter 102.

The battery 110 may include one or more battery packs, where an individual battery pack may include a plurality of battery cells. The configuration of the battery 110 can be determined based on specific applications. The battery 110 may provide electric power to the inverter 102, which in turn supplies electric power to the motor 104.

System controller 106 may monitor a fault protection circuit. The fault protection circuit may, for example, include one or more measurement points. The measurement points may, as one example, allow measurement of current in the circuit. The measurement points may, as another example, allow measurement of voltage in the circuit. The system controller 106 may detect a circuit fault based on measurements at the one or more measurement points. When a circuit fault is detected, as one example, the system controller 106 may isolate battery 110. The system controller 106 may, for example, isolate battery 110 with interrupting contactor circuit 108.

Interrupting contactor circuit 108 may, in some examples, include an interrupting contactor and control circuitry. Interrupting contactor circuit 108 may be electrically connected to battery 110. Interrupting contactor circuit 110 may, for example, be configured to electrically connect the battery 110 to an end of a load in a closed state and to electrically isolate the battery from the end of the load in an open state. Interrupting contactor circuit 108 may, for example, be able to switch between an open state and a closed state. System controller 106 may, for example, cause interrupting contactor circuit 108 to enter an open state. System controller 106 may alternatively cause interrupting contactor circuit 108 to enter a closed state.

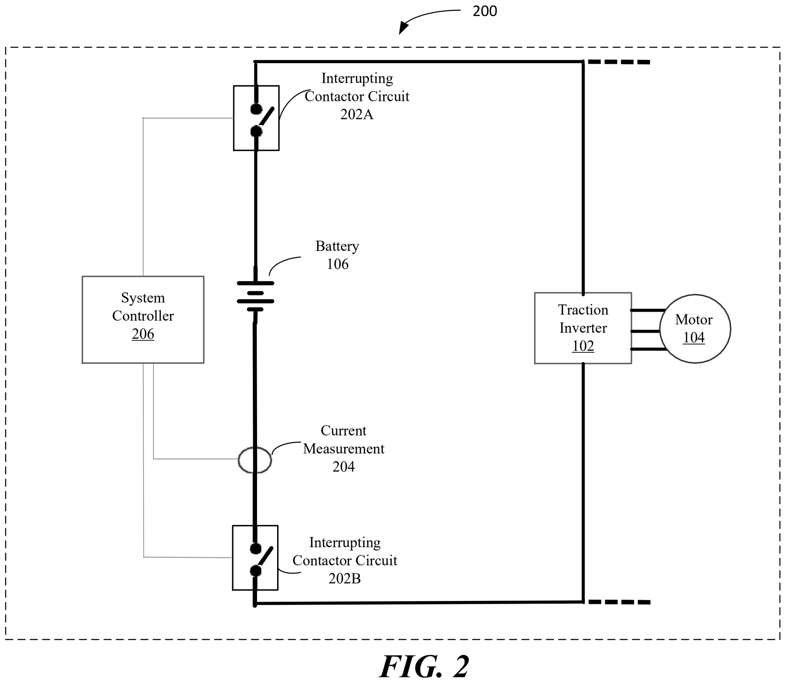

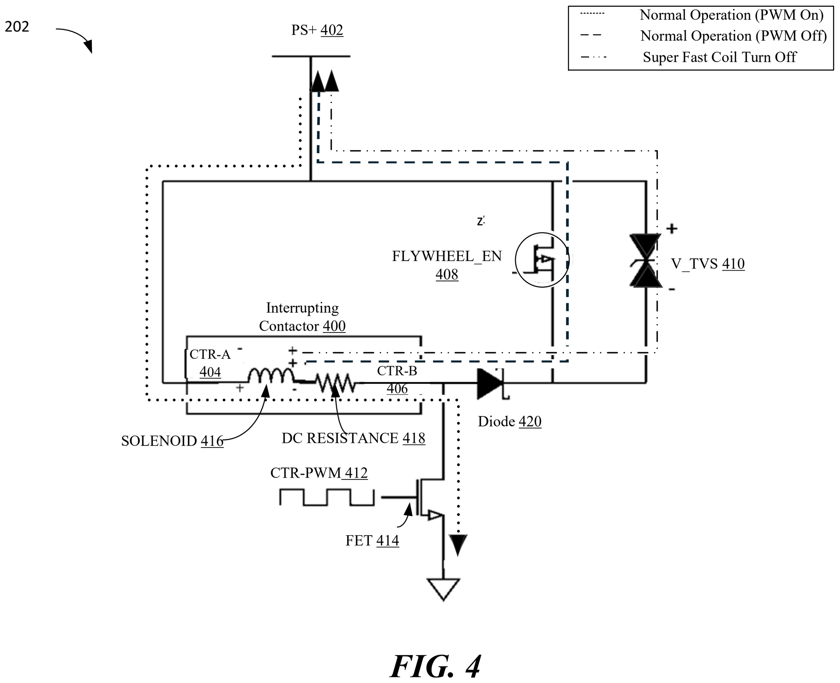

When interrupting contactor circuit 108 is in an open state, the fault protection circuit may be an open circuit. This may isolate battery 110 from damage from an overstress current, overstress voltage, and the like, or some combination thereof. System controller 106 may, in some example, open interrupting contactor circuit 108 using super fast coil turn off, as described further herein. Example fault protection circuits including system controller 106 and one or more interrupting contactor circuits 108 are described further at least with respect to FIGS. 2-3. Operation of interrupting contactor circuit 108 is described further at least with respect to FIG. 4.

### Example Circuit for Battery Protection

FIG. 2 illustrates example schematics for a circuit 200 to facilitate battery protection using interrupting contactors 108 in accordance with some aspects of the present disclosure. Battery 110 may be in electrical communication with inverter 102 and motor 104 through interrupting contactor circuits 108. System controller 106 may monitor the current in circuit 200 at current measurement point 204. Any suitable current sensor can be implemented to measure current. Based on the measured current indicating a fault, system controller 108 may open at least one of interrupting contractor circuits 108.

Interrupting contactor circuits 108 may, in some examples, form part of system controller 106. System controller 106 may be electrically connected to interrupting contactor circuits 108. System controller 106 may further be capable of toggling interrupting contactor circuits 108 open or closed. System controller 106 may, for example, further be capable of providing a control signal to toggle interrupting contactor circuits 108 open or closed. Opening an interrupting contactor circuit 108 may electrically isolate an end of the battery 110 from the inverter 102. This can impede current flow through the interrupting contactor circuit 108. Opening an interrupting contactor circuit 108 may thus prevent damage and/or other undesired effects to components of circuit 200. Opening an interrupting contactor circuit 108 may, for example, prevent damage and/or other undesired effects to battery 110, inverter 102, and/or motor 104. The circuit 200 can provide fault protection when the system controller 106 is unpowered. The interrupting contactor circuits 108 can, for example, be in an open state when the system controller 106 is unpowered to provide fault protection. The interrupting contactor circuits 108 can transition to the open state when the system controller 106 loses power during normal operation. This may advantageously provide passive protection of a circuit including interrupting contactor circuits 108, the surrounding environments of such systems, and the like, or some combination thereof.

As described with respect to FIG. 1, the battery 110 may include one or more battery packs, where an individual battery pack may include a plurality of battery cells. As illustrated in FIG. 2, interrupting contactor circuit 108A is connected to a positive terminal of battery 110. Interrupting contactor circuit 108B is connected to a negative terminal of battery 110. However, other options are possible. In some examples, both interrupting contactor circuit 108A and interrupting contactor circuit 108B may be connected to the same terminal of battery 110. Both interrupting contactor circuit 108A and interrupting contactor circuit 108B may, for example, be connected to a positive terminal of battery 110.

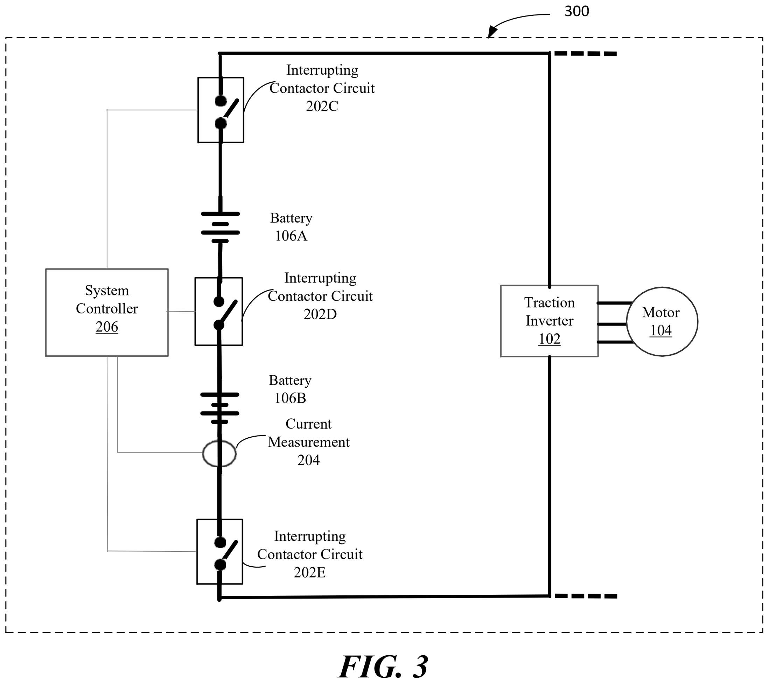

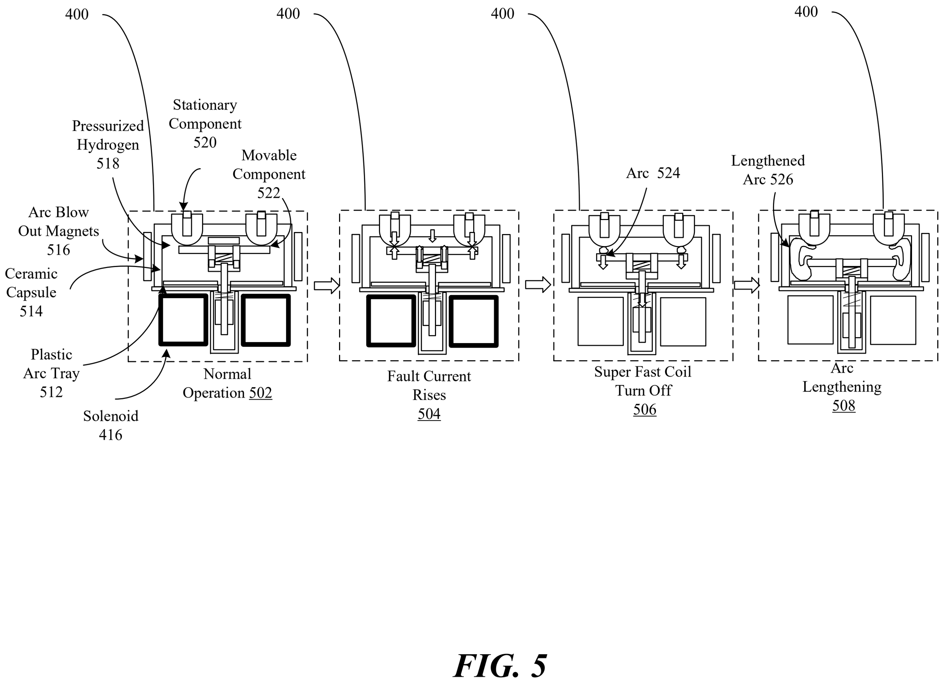

As another example, more or fewer interrupting contactor circuits 108 may be used. As one example, one interrupting contactor circuit 108 may be controlled by system controller 110 to facilitate fault protection. As another example, system controller 110 may control three or more interrupting contactor circuits 108 to facilitate fault protection. Another circuit including to facilitate fault protection using interrupting contactor circuits 108 is described with respect to FIG. 3. Systems and methods for fast coil turn off of interrupting contactors 108 will be described further with respect to FIGS. 5 - 6.

Utilizing multiple interrupting contactor circuits 108 may advantageously improve reliability of the circuit. Super fast coil turn off switches the interrupting contactor circuit 108 to an open state. In the open state, current may not flow through interrupting contactor circuit 108 to other components of circuit 200. For example, interrupting contactor circuit 108 may close in response to a higher current on startup. The interrupting contactor circuit 108 may thereafter remain closed under a lower coil current. The lower current may also be referred to as an "economy current" herein. The system controller 106 may, for example, turn on the interrupting contactor circuit 108 at the higher current, and lower the current thereafter to economize the interrupting contactor circuit 108.

A circuit fault may occur shortly after startup, and before the interrupting contactor circuit 108 is economized. This may result in a larger coil current flowing through interrupting contactor circuit 108. Where multiple interrupting contactor circuits 108 are present, the system controller 106 may sequence turn on of the contactors. For example, interrupting contactor 108A may be turned on before interrupting contactor 108B. This may increase the likelihood that super fast coil turn off can be applied to at least interrupting contactor 108B. This in turn reduces a risk of damage to other components of circuit 200 when a circuit fault occurs shortly after startup.

In further examples, an interrupting contactor circuit 108 may have a defect. As one example, the interrupting contactor of an interrupting contactor circuit 108 may include hydrogen. The defect may be loss of some or all of the hydrogen.

The defect may, as one example, impede interrupting contactor circuit 108A from responding to the control signal. The defect may alternatively delay opening of interrupting contactor circuit 108A, impeding opening of interrupting contactor circuit 108A, the like, or any suitable combination thereof. However, interrupting contactor circuit 108B may not share this defect. Interrupting contactor circuit 108B may thus open (also referred to herein as "enter an open state") responsive to the control signal. Opening interrupting contactor circuit 108B may advantageously reduce damage to circuit 200 at least by reducing the amount of current flowing through components of circuit 200.

In some examples, system controller 106 may detect or diagnose issues with interrupting contactor circuits 108 on startup. System controller 106 may, for example, determine whether an interrupting contactor of interrupting contactor circuits 108 have lost hydrogen. System controller 106 may, as another example, detect damage to an element of interrupting contactor circuit 108, such as diode 410. If an issue is detected, system controller 106 may abort the start-up process.. However, a defect may also occur after the diagnosis process. As described above, including multiple interrupting contactor circuits 108 may improve reliability. This can at least be because there would be a lower probability of a defect occurring in all of the multiple interrupting contactor circuits 108. In some examples, system controller 106 may be configured to return the circuit to operation after the fault is resolved.

FIG. 3 illustrates an example schematic diagram for a circuit 300 to facilitate battery protection using interrupting contactor circuits 108 in accordance with some aspects of the present disclosure. Batteries 110 may be in electrical communication with inverter 102 and motor 104 through interrupting contactor circuits 108. System controller 106 may monitor the current in circuit 200 at current measurement point 204. The system controller 106 can monitor current in the circuit 200 at any other suitable current measurement point. In certain applications, the system controller 106 can monitor current in the circuit 200 two or more suitable current measurement points. Based on the measured current, system controller 108 may open at least one of interrupting contractor circuits 108.

As illustrated in FIG. 3, battery 110A is electrically connected to inverter 102 through interrupting contactor circuit 108C. Battery 110A is connected to battery 110B through interrupting contactor circuit 108D. Battery 110B is connected through interrupting contactor circuit 108E. As described with respect to FIG. 2, utilizing multiple interrupting contactor circuits 108 may advantageously improve reliability of the circuit 300.

### Example Interrupting Contactor Circuit

FIG. 4 illustrates an example interrupting contactor circuit 108 including an interrupting contactor 400 and associated control circuitry in accordance with some aspects of the present disclosure. Interrupting contactor circuit 108 includes interrupting contactor 400, a power source (PS+) 402, a flywheel enable field effect transistor (FET) 408, a diode 410, FET 414, and diode 420. A system controller (e.g., system controller 106 of FIGS. 2-3) may use interrupting contactor circuit 108 to implement super fast coil turn off, for example, as described herein.

Interrupting contactor 400, as illustrated in FIG. 4, includes circuit elements modeling operation of interrupting contactor 400. The circuit elements include an inductor representing a solenoid 416 and DC resistance 418 representing a DC resistance of interrupting contactor 400. Interrupting contactor 400 will be described further with respect to FIG. 5.

Power source (PS+) 402 may, in some examples, be connected to a larger fault protection circuit (e.g., circuit 200, circuit 300, etc.). PS+ 402 may, for example, represent a positive voltage supplied to the larger fault protection circuit.

A system controller 106 may be electrically connected to interrupting contactor 108, such as described with respect to FIGS. 2-3. The system controller 106 may, for example, control flywheel enable FET 408 and FET 414. Turning off flywheel enable FET 408 and FET 414 may initiate super-fast coil turn off, as described further herein.

Flywheel enable FET 408 and FET 414, as illustrated in FIG. 4, can be p-channel metal oxide semiconductor FETs (P-MOSFETs). However, different types of transistors may be used. The different types of transistors may include, but are not limited to, n-channel metal oxide semiconductor FETs (N-MOSFETs), bipolar junction transistors (BJTs), insulated gate bipolar transistors (IGBTs), and the like, or any suitable combination thereof.

In some examples, system controller 106 may use a gate drive circuit to control flywheel enable FET 408. System controller 106 may also use a gate drive circuit to control FET 414. System controller 106 may, for example, include one or more gate drive circuits. The system controller 106 may use the one or more gate drive circuits to apply enough current to each of flywheel enable FET 408 and FET 414 both sourcing and sinking to enable flywheel enable FET 408 and FET 414 to switch quickly.

Diode 410 may be a transient voltage suppressor diode. Diode 410 may, for example, clamp the voltage when a transient event occurs. The diode 410 can clamp the voltage when a voltage V_TVS across the diode 410 satisfies (e.g., exceeds) a threshold. Diode 410 may, in some examples, be unidirectional. Alternatively, Diode 410 may be bidirectional, for example as illustrated. Diode 410 may, in some examples, be connected in parallel to flywheel enable FET 408, as illustrated.

Diode 420 may be a diode which permits current to flow from power source (PS+) 402 through contactor 400. Diode 420 may, for example, allow coil current from interrupting contactor 400 to flow through interrupting contactor circuit 108, as described further herein.

Under normal operation, the flywheel enable FET 408 may be on and conducting current. Operation of FET 414 may, in further examples, control the interrupting contactor circuit 108. System controller 106 may, for example, supply a PWM control signal to FET 414 to generate a coil current to close interrupting contactor 400.

When the PWM signal is on, for example, system controller 106 may provide a an on signal through PWM control signal (CTR-PWM). 412 (PWM on signal, for brevity)The PWM on signal may cause the voltage between the power source (PS+) 402 and the interrupting contactor 400 to be substantially similar to the voltage of power source (PS+) 402. The voltage between the power source (PS+) 402 and the interrupting contactor 400 may, in some examples, be measured at voltage nodes CTR-A 404 and CTR-B 406.

System controller 106 may, in further examples, provide an off signal through PWM control signal 412 (PWM off signal, for brevity). PWM off signal may cause the voltage between interrupting contactor 400 and FET 414 to be substantially 0V. A voltage V_TVS across diode 410 may be substantially 0V. The voltage between interrupting contactor 400 and FET 414 to be substantially 0V may, in some examples, be measured at voltage nodes CTR-A 404 and CTR-B 406.

The PWM off signal may cause the voltage between the power source (PS+ 402) and the interrupting contactor 400 to be substantially similar to the voltage of power source (PS+) 402. The PWM on signal may cause the voltage between interrupting contactor 400 and FET 414 to be substantially similar to power source (PS+) 402. A voltage V_TVS across diode 410 may be substantially 0V.

FET 414 may further provide a path to ground for the interrupting contactor 400. System controller 106 may, for example, supply current to a solenoid of interrupting contactor 400, for example, as described further with reference to FIG. 5. System controller 106 may, in some examples, cause a larger coil current to close interrupting contactor 400 on startup. System controller 106 may, in further examples, cause an economy current to keep interrupting contactor 400 closed thereafter. Causing the economy current may facilitate super fast coil turn off. Reduction of coil current to the economy current may, for example, allow the coil current to dissipate faster when super fast coil turn off is initiated, as described herein. Time to implement super fast coil turn off with the economy current may, in some examples, be less than one millisecond.

The economy current may, as one example, be half an amp ("0.5 A"). The larger coil current may, as one example, be approximately three amps. Time to implement super fast coil turn off with the economy current may, in some examples, be approximately half a millisecond ("0.5 ms"). The super fast coil turn off can be implemented in less than 1 ms.

FET 414 may be on when a PWM on signal is supplied by system controller 106. When the FET 414 is turned on, the current flows through PS+ 402 through solenoid 416 through FET 414 to ground. However, when FET 414 is turned off, solenoid 416 may recirculate the coil current through the interrupting contactor 400 and the diode 410. FET 414 may be off when a PWM off signal is supplied by system controller 106. The inductance of solenoid 416 may keep the coil current more or less constant as the PWM signal causes the FET 414 to switch on and off. FET 414 switching on and off may cause the voltage supplied to interrupting contactor circuit 108 to switch on and off.

To open interrupting contactor 400, system controller 106 may stop the PWM signal to FET 414. Stopping the PWM signal may cause the FET 414 to remain off. However, the coil current recirculating based on the inductance of solenoid 416 may have to substantially dissipate before interrupting contactor 400 can open. The time for the coil current to dissipate may depend on one or more of a variety of factors. The factors may include, but are not limited to, the inductance of solenoid 416, the resistance of the interrupting contactor circuit 108, and the coil current that was flowing through the interrupting contactor circuit 108 when system controller 106 halted the PWM signal to FET 414.

During the time the coil current is dissipating, interrupting contactor 400 may be opening relatively slowly. The components that keep interrupting contactor 400 in a closed state may be coming apart slowly and creating an arc, for example, as described further with respect to FIG. 5. The arc may be caused by the fault current. The longer the current takes to dissipate, the longer interrupting contactor 400 may remain in a closed state. The longer time may also result in a larger arc developing within interrupting contactor 400. A larger arc may correspond with a higher arc voltage. This may lead to rupturing of interrupting contactor 400. To speed the process of opening an interrupting contactor 400, system controller 106 may implement super fast coil turn off. This may reduce the time to open the contactor. This may also reduce the time in which the arc develops within interrupting contactor 400. The reduction of time may reduce the size of the arc. A smaller arc may correspond to a smaller arc voltage. The interrupting contactor 400 may be less likely to rupture with the reduced arc size.

To implement super fast coil turn off, the system controller 106 may turn off the FET 414. System controller 106 may additionally insert a high series voltage in interrupting contactor circuit 108. System controller 106 may, for example, turn flywheel enable FET 408 off. Switching flywheel enable FET 408 off may cause diode 410 to act as a voltage source for a bus voltage. The bus voltage may be greater than the arc voltage of the interrupting contactor 400. After application of the bus voltage, the arc voltage of the interrupting contactor 400 may ge greater than a supply voltage of the battery. The voltage V_TVS across the diode 410 may, in some examples, be one the scale of tens of Volts (V). The voltage V_TVS across the diode 410 may, for example, be approximately 100 V. Switching flywheel enable FET 408 off may turn flywheel enable FET 408 off.

In some examples, flywheel enable FET 408 and FET 414 may be off when in when a system controller is off. Accordingly, the system controller 106 may not need to be on to implement super fast coil turn off. If the system controller 106 fails, for example, current to flywheel enable FET 408 and FET 414 will be stopped. The super fast coil turn off will then proceed as described above. The system may thus be configured to provide circuit fault protection while the controller is unpowered.

### Example Operation of an Interrupting Contactor

FIG. 5 illustrates example operation of an interrupting contactor 400 in accordance with some aspects of the present disclosure. As described herein, the interrupting contactor 400 may be a hydrogen filled switch capable of switching DC electrical loads. The interrupting contractor 400 may be part of an interrupting contactor circuit 108, for example, as described herein with respect to FIGS. 1 - 4. Components of interrupting contactor 400 may facilitate direction of an arc that develops within interrupting contactor 400. An arc may, for example, develop within interrupting contactor 400 as a result of a fault current. The fault current may, for example, be a short circuit current.

While interrupting contactor 400 is illustrated in FIG. 4 as a hydrogen filled switch capable of switching DC electrical loads, other options are possible. Interrupting contactor 400 may, for example be any suitable contactor with arc quenching capabilities. The interrupting contactor 400 may, in some examples, be an open-air contactor. Quenching an arc developed in interrupting contactor 400 may advantageously reduce damage caused by arcs within the interrupting contactor 400.

Interrupting contactor 400, as illustrated in FIG. 5, includes solenoid 416, plastic arc tray 512, ceramic capsule 515, arc blow out magnets 516, pressurized hydrogen 518, stationary component 520, and movable component 522. Solenoid 416 may facilitate opening and closing of the interrupting contactor 400. Activation of solenoid 416 may, for example, change the location of moveable component 522 with respect to stationary component 520. Plastic arc tray 512 may help contain an arc that develops within interrupting contactor 400. Ceramic capsule 515 may form an envelope which seals the arc that develops within interrupting contactor 400. Ceramic capsule 515 may be gas-impermeable, electrically insulating, the like, or some combination thereof. Arc blow out magnets 516 may help control the location of the arc. For example, arc blow out magnets 516 may help keep the location of the arc between stationary component 520 and moveable component 522. Pressurized hydrogen 518 may further facilitate direction of the arc. Pressurized hydrogen 518 may, for example facilitate direction of the arc by plastic arc tray 512, ceramic capsule 515, arc blow out magnets 516, or any suitable combination thereof.

Under normal operation at block 502, coil current may be supplied to solenoid 416 to maintain contact between movable component 522 and stationary component 520. This contact may allow current to flow in a circuit including interrupting contactor 400 (e.g., circuit 200 of FIG. 2, circuit 300 of FIG. 3, etc.) A fault current may arise in a circuit including interrupting contactor 400. As fault current rises at block 505, a force may grow between the moveable component 522 and stationary component 520. The force (also referred to herein as "contact levitation") may may be a magnetic force caused by the flow of the fault current through the interrupting contactor 400.

A system controller, such as system controller 106 of FIG. 2-3 may detect the fault current rising when the interrupting contactor 400 shifts from normal operation at block 502 to block 502 as the fault current rises. The time period to shift between normal operation at block 502 and block 505 as a fault current rises may be approximately one millisecond, as one example. The system controller 106 may, in further examples, detect the fault current rising in the approximately one millisecond time period.

The system controller 106 may, for example, sense contact levitation separating movable component 522 and stationary component 520. The system controller 106 may, for example, determine based on a measurement at current measurement 205 that the current is high enough to begin contact levitation within an interrupting contactor 400 included in an interrupting contactor circuit 108. The system controller 106 may then initiate super fast coil turn off at block 506. During super fast coil turn off, an arc 525 may also begin to build between movable component 522 and stationary component 520. Arc 525 may apply further pressure to separate movable component 522 and stationary component 520. The system controller 106 may discharge the coil current using interrupting contactor circuit 108, as further described with respect to FIG. 5 - FIG. 6. Discharging coil current may lead to stronger return spring and increased arc pressure of arc 525. The stronger return spring and increased arc pressure may further separate movable component 522 and stationary component 520. The time to complete super fast coil turn off may, as one example, be approximately 2 milliseconds from detection of a fault current rising at block 505.

At block 508 the arc 525 may lengthen to become lengthened arc 526. Lengthened arc 526 may further separate movable component 522 and stationary component 520. To facilitate generation of lengthened arc 526 in a direction that further separate movable component 522 and stationary component 520, arc blowout magnets 516 may sequence arc 525 against the ceramic capsule 515. Pressurized hydrogen 518 may form a dielectric atmosphere within interrupting contactor 400. The dielectric atmosphere generated within interrupting contactor 400 may further facilitate generation of lengthened arc 526 in a direction that further separate movable component 522 and stationary component 520. The dielectric atmosphere may, for example, absorb arc energy. The time period to generate lengthened arc 526 may, as one example, be between four milliseconds and five milliseconds. After block 508, interrupting contactor 400 may be in an open state. The open state may be a state in which the movable component 522 and stationary component 520 are separated at a sufficient distance to impede flow of the fault current to a circuit including interrupting contactor 400 (e.g., circuit 200 of FIG. 2, circuit 300 of FIG. 3, etc.)

Super fast coil turn off at block 506 may reduce an overall time period sufficient to achieve an open state of interrupting contactor 400 (e.g., circuit 200 of FIG. 2, circuit 300 of FIG. 3, etc.). This may advantageously reduce a risk of damage to the circuit include including interrupting contactor 400 (e.g., circuit 200 of FIG. 2, circuit 300 of FIG. 3, etc.). The risk of damage will be reduced at least because when interrupting contactor 400 will be in an open state, which may isolate the downstream components from the fault current. In addition, reduction of the overall time period sufficient to achieve an open state of interrupting contactor 400 may reduce a risk of damage to the interrupting contactor 400 itself. This is at least because the arc will have less time to build in energy based on the received fault current. Less arc energy may allow interrupting contactor 400 to more easily direct the arc energy, as described herein, which may prevent damage to interrupting contactor 400.

### Example Waveforms Associated With Handling A Fault Circuit Using An Interrupting Contactor

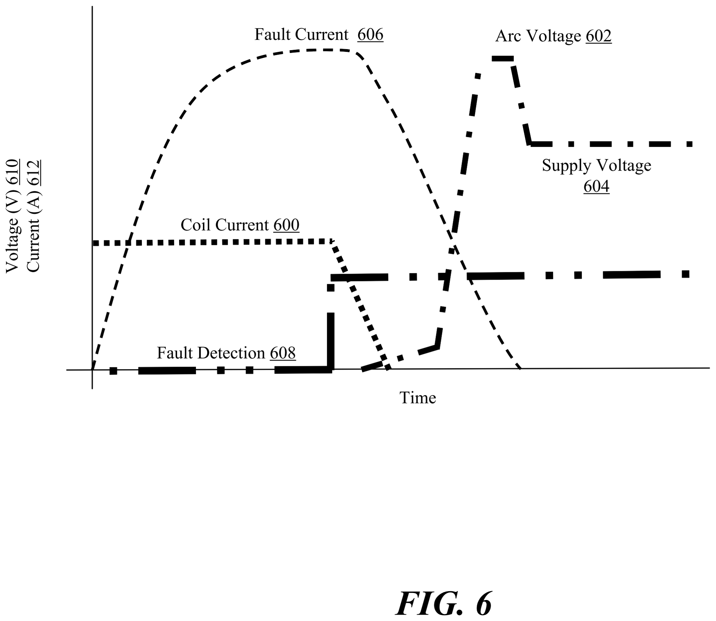

FIG. 6 illustrates example waveforms associated with handling a fault circuit using an interrupting contactor in accordance with some aspects of the present disclosure. The waveforms illustrated in FIG. 6 include coil current 600, interrupting contactor arc voltage 602, supply voltage 604, fault current 606, and fault detection 608.

Voltage waveforms (e.g., interrupting contactor arc voltage 602, supply voltage 604, etc.) may correspond to voltage axis 610. Current waveforms (e.g., coil current 600, fault current 606, etc.) may correspond to current axis 612. However, other options are possible. Each waveform may, for example, ,correspond to a different axis. Coil current 600, and fault current 606 may, as one example, correspond to current axes at different scales.

Coil current 600 may represent coil current supplied to a solenoid (e.g., solenoid 416 of FIG. 4) of an interrupting contactor (e.g., interrupting contactor 400 of FIGS. 4-5). Fault detection 608 may be a digital signal representing whether a fault has occurred.

Fault detection 608 may, in some examples, be based on fault current 606. Fault current may represent current in amps. The highest value in fault current 606 may, in some examples, be greater than 10,000 amps. When the fault current 606 reaches a threshold value, a system controller (e.g., system controller 106 of FIGS. 2-3) may detect the fault. System controller 106 may then cause fault detection 608 to change from a normal state to a fault state. The normal state, as illustrated in FIG. 6 may be zero. The fault state, as illustrated in FIG. 6, may be one. However, in some examples, the fault state may be zero, while the normal state may be one.

When the system controller 106 changes fault detection 608 to a fault state, the system controller 106 may further turn off the coil current 600. When the coil current 600 is turned off, the interrupting contactor arc voltage 602 may rise. Interrupting contactor arc voltage 602 may represent the differential voltage between movable component 422 and stationary component 420 of interrupting contactor 400. If the interrupting contactor arc voltage 602 is higher than the supply voltage 604 of a battery in the circuit, then the interrupting contactor 400 may be able to interrupt the fault current, as described with respect to FIGS. 4-5.

### Terminology

Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Where the context permits, words in the above Detailed Description using the singular or plural number may also include the plural or singular number respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "may," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments.

The foregoing description has been described with reference to specific embodiments. However, the illustrative discussions above are not intended to be exhaustive or to limit the inventions to the precise forms described. Many modifications and variations are possible in view of the above teachings. Others skilled in the art are thereby enabled to best utilize the techniques and various embodiments with various modifications as suited to various uses.

Although the disclosure and examples have been described with reference to the accompanying drawings, various changes and modifications will become apparent to those skilled in the art. Such changes and modifications are to be understood as being included within the scope of the disclosure.

## Claims

1. A system with circuit fault protection, the system comprising:
a battery;
a first interrupting contactor electrically connected with the battery, the first interrupting contactor configured to electrically connect the battery to an end of a load in a closed state and to electrically isolate the battery from the end of the load in an open state; and
a controller configured to:
while the first interrupting contactor is in the closed state, detect a fault in a circuit that includes the battery and the first interrupting contactor; and
toggle the first interrupting contactor to the open state in response to detecting the fault.

2. The system of Claim 1, wherein the controller is configured to toggle the first interrupting contactor to the open state in less than 1 millisecond from detecting the fault; and/or wherein to toggle the first interrupting contactor to the open state, the controller is configured to reduce a coil current of the first interrupting contactor at least by switching a state of a first transistor, and wherein reducing the coil current of the first interrupting contactor causes the first interrupting contactor to enter the open state.

3. The system of Claim 2, wherein to reduce a coil current of the first interrupting contactor, the controller is configured to switch a state of a second transistor, the second transistor applying a pulse width modulation signal to the circuit during normal operation, and the second transistor connected to ground.

4. The system of Claim 2 or 3, wherein switching the state of the first transistor causes a bus voltage to be applied to the first interrupting contactor, and wherein, after application of the bus voltage, an arc voltage of the first interrupting contactor is greater than a supply voltage of the battery.

5. The system of Claim 4:
wherein a diode in parallel with the first transistor is configured to function as a voltage source for the bus voltage applied to the first interrupting contactor, and
wherein the bus voltage applied to the first interrupting contactor causes the coil current to flow to ground.

6. The system of one of the preceding claims, further comprising a second interrupting contactor in electrical communication with the battery.

7. The system of one of the preceding claims, wherein the controller is further configured to return the system to operation after the fault is resolved; and/or wherein the system is configured to provide circuit fault protection while the controller is unpowered.

8. The system one of claims 1 to 5 or 7, the system comprising:
a plurality of interrupting contactors, the plurality of interrupting contactors comprising:
the first interrupting contactor; and
a second interrupting contactor configured to electrically connect the battery to a second end of the load in a closed state and to electrically isolate the battery from the load in an open state.

9. The system of Claim 8, wherein the controller further comprises:
the first transistor in electrical communication with the first interrupting contactor;
a first diode in parallel to the first transistor; and
the second transistor connected between the first interrupting contactor and ground; and
a third transistor in electrical communication with the second interrupting contactor;
a third diode in parallel to the third transistor; and
a fourth transistor connected between the second interrupting contactor and ground.

10. The system of Claim 8 or 9, further comprising a third interrupting contractor in series with the first interrupting contactor.

11. A method of circuit protection, the method comprising:
detecting a fault condition of a circuit that includes an interrupting contactor and a battery, the interrupting contactor being closed to electrically connect an end of the battery to a load during the detecting, and the fault condition being associated with a fault current being applied to the circuit; and
in response to said detecting, causing the interrupting contactor to open to electrically isolate the end of the battery from the load to thereby interrupt the fault current.

12. The method of Claim 11, wherein said causing the interrupting contactor to the open occurs in less than 1 millisecond from detecting the fault condition and/or wherein said causing the interrupting contactor to open further comprises applying a bus voltage greater than an supply voltage of the battery to the interrupting contactor.

13. The method of Claim 12, wherein said applying the bus voltage greater than a supply voltage of the battery further comprises:
switching a state of a first transistor, wherein switching the state of the first transistor causes a diode in parallel with the first transistor to function as a voltage source for the bus voltage applied to the interrupting contactor; and
wherein the bus voltage being applied to the interrupting contactor causes a coil current of the interrupting contactor to flow to ground.

14. The method of Claim 12 or 13, wherein applying the bus voltage greater than the supply voltage of the battery further comprises switching a state of a second transistor, the second transistor applying a pulse width modulation signal to the circuit, and the second transistor connected to ground.

15. The method of one of claims 11 to 14, wherein the fault condition is a short circuit.
